# EUROPÄISCHE PATENTSCHRIFT

(11) **EP 1 412 428 B1**
(45) Veröffentlichungstag und Bekanntmachung des Hinweises auf die Patenterteilung: **12.11.2008**
(21) Anmeldenummer: 02764669.4
(22) Anmeldetag: 11.07.2002
(51) Int. Cl.: C08K 5/13, C08L 77/00

(54) **POLYAMIDE-ZUSAMMENSETZUNGEN ENTHALTEND ANTIOXIDANTIEN**
POLYAMIDE COMPOSITIONS COMPRISING ANTIOXIDANTS
COMPOSITIONS DE POLYAMIDE COMPRENANT DES ANTIOXYDANTS

(30) Priorität: 14.07.2001 DE 10134327
(43) Veröffentlichungstag der Anmeldung: 28.04.2004
(73) Patentinhaber: Raschig GmbH, 67061 Ludwigshafen (DE)
(72) Erfinder: ASBAHR, Hark-Oluf, 67161 Gönnheim (DE); BOMBA, Thomas, 67127 Rödersheim-Gronau (DE)
(74) Vertreter: Patentanwälte Zellentin & Partner
(86) Internationale Anmeldenummer: PCT/EP2002/007718
(87) Internationale Veröffentlichungsnummer: WO 2003/008492

(56) Entgegenhaltungen:
- EP-A- 0 281 398
- EP-A- 0 669 367
- WO-A-01/23498
- DE-A- 10 058 135
- US-A- 5 874 497

## Beschreibung

Die Erfindung betrifft Zusammensetzungen enthaltend ein Polyamid und ein sterisch gehindertes Phenol als Antioxidantionsmittel.

Bei der Verarbeitung und Herstellung von Halbfabrikaten und Endprodukten thermoplastischer Polyamide durch Extrudieren, Spritzgießen etc. müssen den Kunststoffen Alterungsschutzmittel zugesetzt werden, um zu verhindern, dass die Kunststoffe durch die dabei auftretenden Abbauvorgänge vergilben bzw. in ihren mechanischen Eigenschaften wie Schlagzähigkeit, Versprödungsresistenz, Reißfestigkeit usw. geschädigt werden. Das gleiche gilt auch für die Lagerung und den Gebrauch der Endprodukte.

Der Abbaumechanismus ist noch nicht endgültig geklärt, jedoch wird angenommen, dass durch Energiezufuhr und Sauerstoff Radikale, insbesondere Peroxidradikale gebildet werden, welche über entsprechende Mechanismen der Kettenfortpflanzung und Kettenverzweigung den radikalischen Abbau und die Oxidation fortleiten.

Um dies zu verhindern, werden Antioxidantien zugesetzt, wobei diese prinzipiell in zwei Gruppen eingeteilt werden. Besonders wichtig sind die Radikalfänger, vorzugsweise sterisch gehinderte Phenole, welche einerseits, unter Übertragung eines Wasserstoffradikals, Radikale abfangen, wodurch sich aus dem Phenol ein stabilisiertes Phenolradikal bildet, und andererseits durch Addition dieses so gebildeten stabilisierten Phenolradikals an ein zweites Radikal, dieses zusätzlich abfangen. Diese Gruppe wird als primäre Antioxidantien bezeichnet.

Weiterhin werden die sogenannten sekundären Antioxidantien eingesetzt, welche direkt Hydroperoxidgruppen unter Reduktion abbauen, ohne dass dabei erneut Radikale entstehen. Zu dieser Gruppe gehören als typische Vertreter die Phosphite und organischen Sulfide, insbesondere die Thioester (Taschenbuch der Kunststoff-Additive, 3. Ausgabe (1989)).

Im allgemeinen wird ein System aus verschiedenen Stabilisatoren mit dem Ziel eines synergistischen Effektes eingesetzt, wobei dies nicht zwingend ist. Für Polyamid ist das zur Zeit am meisten verwendete nicht verfärbende Antioxidans Irganox 1098 von Ciba, ein dimeres Phenol mit folgender Formel:

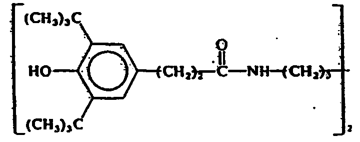

Ein weiteres bekanntes Antioxidans für Polyamid ist Irganox 254:

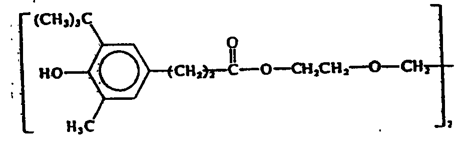

Eine Übersicht über verschiedene Antioxidantien findet sich zum Beispiel in Gächter / Müller "Kunststoffadditive" 3. Aufl.1990, Hanser Verlag München Wien.

Die Verwendung eines sterisch gehinderten Phenols der Formel I

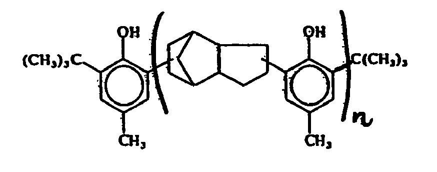

in einer Kombination mit Thioestern und Phosphiten als Alterungsschutzmittel für Co- und Terpolymere des Styrols ist in der DE 197 50 747 beschrieben.

Aus der EP 669 376 A1 ist eine Stabilisatormischung aus zwei sterisch gehinderten Phenolen bekannt, die auch für Polyamide und Copolyamide verwendbar sein soll. Das einzige Beispiel bezieht sich auf die Stabilisierung von Acrylnitril-Butadien-Styrol-Terpolymer mit einer Mischung aus 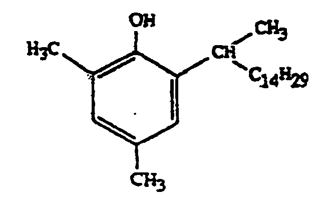 und

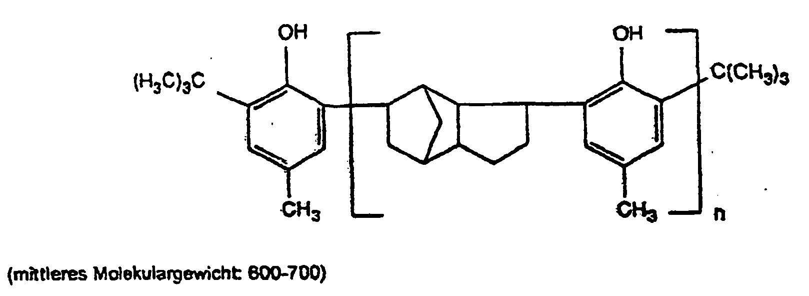

Obwohl bereits eine Vielzahl von Antioxidantien für Polyamide bekannt sind, besteht weiterhin Bedarf an verbesserten, insbesondere wirksameren und kostengünstigeren Stabilisatoren. Die Aufgabe der vorliegenden Erfindung besteht darin, verbesserte Wirkstoffe zu finden.

Überraschenderweise wurde nunmehr gefunden, dass ein sterisch gehindertes Phenol der Formel I: 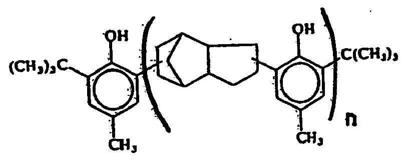 mit n = 1-5, als einziges primäres Antioxidans für Polyamide eine wesentlich verbesserte antioxidative Wirkung gegenüber den herkömmlichen Antioxidantien zeigt.

Die Lösung der Aufgabe besteht daher in Zusammensetzungen, die ein Polyamid und eine Verbindung der Formel I als einziges primäres Antioxidationsmittel enthalten.

Insgesamt werden 0,01 bis 5 Gew.-%, vorzugsweise 0,1 bis 3 Gew.-% der Verbindung, bezogen auf das Polymere, eingesetzt.

Die Verbindung der Formel I ist unter dem Markennamen RALOX^{®} LC von der Firma Raschig GmbH, Ludwigshafen erhältlich. RALOX^{®} LC (CAS Nr. 68610-51-5 butyliertes Reaktionsprodukt aus p-Kresol und Dicyclopentadien) wird hergestellt durch Friedel-Crafts-Reaktion von p-Kresol und Tricyclo-[5.2.1.0]-decadien in einem Molverhältnis von 10 : 1 bis 1 : 5 und anschließende Umsetzung mit Isobuten oder tert.-Butanol oder tert.-Butylchlorid.

Das Produkt ist ein Gemisch der Oligomeren mit n = 1 - 5.

Je nach Molverhältnis der Ausgangsprodukte und Mischungsverhältnis von "n" besitzen die Verbindungen einen Schmelzpunkt zwischen 70 und 140°C und ein mittleres Molgewicht von 600 bis 800 g/Mol. Sie zeichnen sich durch Schwerflüchtigkeit, gute Verträglichkeit, geringe Migration und hohe Extraktionsbeständigkeit aus.

Als Polyamide kommen erfindungsgemäß Polyamide und Copolyamide in Betracht, die sich von Diaminen und Dicarbonsäuren oder den entsprechenden Lactamen ableiten, wie Polyamid 4, Polyamid 6, Polyamid 6/6, Polyamid 6/10, Polyamid 6/8, Polyamid 6/12, Polyamid 4/6 Polyamid 11, Polyamid 12. Weiterhin aromatisches Polyamid ausgehend von m-Xylol, Diamin und Adipinsäure, Polyamide, hergestellt aus Hexamethylendiamin und Iso- und/oder Terephthalsäure und gegebenenfalls einem Elastomer als Modifikator, z.B.Poly-2,4,4-trimethylhexamethylenterephthalamid, Poly-m-phenylen-isophthalamid, Blockcopolymere der vorstehend genannten Polyamide mit Polyolefinen, Olefin-Copolymeren, lonomeren oder chemisch gebundenen oder gepfropften Elastomeren, oder mit Polyether, wie z.B. mit Polyethylenglykol, Polypropylenglykol oder Polytetramethylenglykol, ferner mit EPDM oder ABS modifizierte Polyamide oder Copolyamide sowie während der Verarbeitung kondensierte Polyamide ("RIM-Polyamidsysteme").

Die erfindungsgemäßen, gegen Verfärbung sowie thermischen und oxidativen Abbau stabilisierten Massen der obengenannten Thermoplaste können wie folgt hergestellt werden:

Das Kunststoffgranulat und das phenolische Antioxidans werden bei Zimmertemperatur miteinander z. B. in einem Rhönradmischer vermengt und über einen gleichlaufenden Zweischneckenkneter bei Schmelztemperatur des Kunststoffs extrudiert. Die Schmelze wird nach dem Extrudieren im Wasserbad gekühlt, granuliert und getrocknet. Das so hergestellte Halbfertigprodukt kann in üblicher Weise, ohne zusätzliche Stabilisierung, weiterverarbeitet werden.

Gewünschtenfalls können auch noch weitere übliche Zusatzstoffe, wie sekundäre Antioxidantien, UV-Absorber und Lichtschutzmittel, Metalldesaktivatoren, Füllstoffe und Verstärkungsmittel, Weichmacher, Gleitmittel, Emulgatoren, Pigmente, optische Aufheller, Flammschutzmittel, Antistatika und/oder Treibmittel zugesetzt werden.

Als sekundäre Antioxidantien kommen vorzugsweise in Betracht:
1.1 Alkylthiomethylphenole:
   z.B.
   - 2,4-Di-octylthiomethyl-6-tert-butylphenol
   - 2,4-Di-octylthiomethyl-6-methylphenol
   - 2,4-Di-octylthiomethyl-6-ethylphenol
   - 2,6-Di-dodecylthiomethyl-4-nonylphenol
1.2 Hydroxylierte Thiodiphenylether:
   z.B.
   - 2,2'-Thio-bis-(6-tert-butyl-4-methylphenol)
   - 2,2'-Thio-bis-(4-octylphenol)
   - 4,4'-Thio-bis-(6-tert-butyl-3-methylphenol)
   - 4,4'-Thio-bis-(6-tert-butyl-2-methylphenol)
   - 4,4'-Thio-bis-(3,6-di-sec.-amylphenol)
   - 4,4'-Bis-(2,6-di-methyl-4-hydroxyphenyl)-disulfid
1.3 Phosphite und Phosphonite
   z.B.
   - Triphenylphosphit
   - Diphenylalkylphosphite
   - Phenyldialkylphosphite
   - Tris-(nonylphenyl)-phosphit
   - Trilaurylphosphit
   - Trioctadecylphosphit
   - Distearyl-pentaerythritdiphosphit
   - Tris-(2,4-di-tert-butylphenyl)-phosphit
   - Diisodecylpentaerythrit-diphosphit
   - Bis-(2,4-di-tert-butylphenyl)-pentaerythritdiphosphit
   - Bis-(2,6-di-tert-butyl-4-methylphenyl)-pentaerythritdiphosphit
   - Bis-isodecyloxy-pentaerythritdiphosphit
   - Bis-(2,4-di-tert-butyl-6-methylphenyl)-pentaerythritdiphosphit
   - Bis-(2,4,6-tri-tert-butylphenyl)-pentaerythritdiphosphit
   - Tristearyl-sorbit-triphosphit
   - Tetrakis-(2,4-di-tert-butylphenyl)-4,4'-biphenylen-diphosphonit
   - 6-Isooctyloxy-2,4,8,10-tetra-tert-butyl-12H-dibenz[d,g]-1,3,2-dioxaphosphocin
   - 6-Fluor-2,4,8,10-tetra-tert-butyl-12-methyl-dibenz[d,g]-1,3,2-dioxaphosphocin
   - Bis-(2,4-di-tert-butyl-6-methylphenyl)-methylphosphit
   - Bis-(2,4-di-tert-butyl-6-methylphenyl)-ethylphosphit
1.4 Peroxidzerstörende Verbindungen
   z.B.
   - Ester der β-Thio-dipropionsäure, beispielsweise der Lauryl-, Stearyl-, Myristyl- oder Tridecylester
   - Mercaptobenzimidazol
   - Das Zinksalz des 2-Mercaptobenzimidazols
   - Zink-dibutyl-dithiocarbamat
   - Dioctadecyldisulfid
   - Pentaerythrit-tetrakis-(β-dodecylmercapto)-propionat
1.5 Polyamidstabilisatoren
   z.B.
   - Kupfersalze in Kombination mit Jodiden und/oder Phosphorverbindungen und Salze des zweiwertigen Mangans.

In den folgenden Beispielen wird die Überlegenheit des erfindungsgemäßen Zusammensetzungen gegenüber den aus dem Stand der Technik bekannten Zusammensetzungen belegt.

### Beispiel 1

### Stabilisierung von Polyamid 6

Die antioxidative Wirkung wurde durch thermische Analyse mittels dynamischer DSC bestimmt. Die Methode wird z.B. in Widmann/Riesen "Thermoanalyse", Hüthig Buch Verlag Heidelberg, 3. Aufl. 1990, Seite 63 beschrieben. Es wurde ein Mettler DSC 20 mit automatischer Tangentenauswertung verwendet. Die Aufheizrate betrug 20°C pro Minute, jede Probe hatte ein Gewicht von ca. 10 mg. Die Ergebnisse sind in Tabelle 1 aufgelistet. Alle Prozentangaben beziehen sich auf das Gewicht.

**Tabelle 1**

| Ifd. Nr. | Antioxidans | Formel | Onset-Temp. |
|---|---|---|---|
| 1 | Ohne (Kontrolle) | | 293 |
| 2 | 1% Ralox BHT | 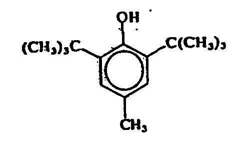 | 295 |
| 3 | 1% Ralox 46 | 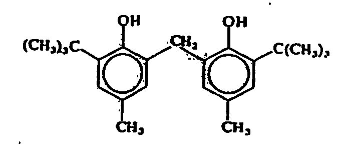 | 297 |
| 4 | 1% Ralox 530 | 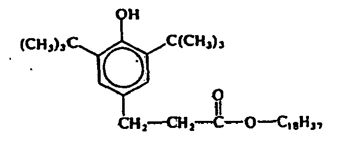 | 300 |
| 5 | 1% Irganox 1098 | 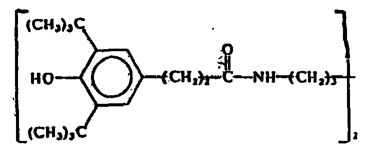 | 301 |
| 6 | 1% Irganox 245 | 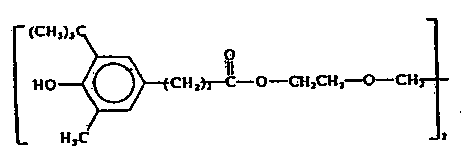 | 301 |
| 7 | 1% Ralox LC | 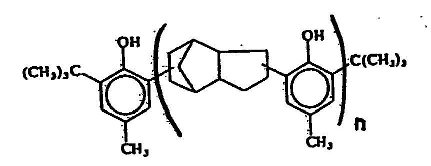 | 307 |

Man erkennt an den Messwerten in der Tabelle 1, dass die erfindungsgemäße Zusammensetzung mit Ralox® LC den bisher üblichen Antioxidantien für Polyamide (Irganox 1098, Irganox 245...) überlegen ist.

### Beispiel 2

Bei dieser Messreihe wurde die Wirkung der erfindungsgemäßen Zusammensetzung mit den aus der EP 699 367 bekannten Stabilisatoren verglichen. Da das reine 2-(1-Methylpentadecyl)-4,6-dimethylphenol nicht kommerziell erhältlich ist, wurde die unter Irganox 1141 von Ciba für Styrolpolymere vetriebene Mischung aus ca. 80% des Phenols und 20 % 2,6-Di-tert.-butyl-4-propionsäureoctadecylester eingesetzt.

Die Untersuchungen erfolgten auf dieselbe Weise wie in Beispiel 1. Die Ergebnisse sind in Tabelle 2 zusammengefasst.

**Tabelle 2**

| Ifd. Nr. | Antioxidans | Formel | Onset- Temperatur |
|---|---|---|---|
| 9 | Ohne (Kontrolle) | | 291 |
| 10 | 1% Ralox LC | 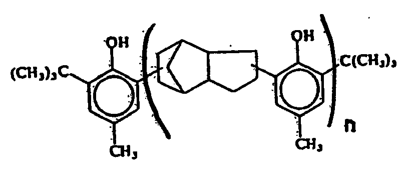 | 312 |
| 11 | 1 % Irganox 1141 | 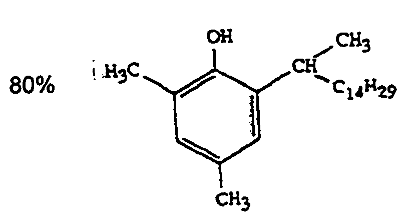 | 309 |
| | | 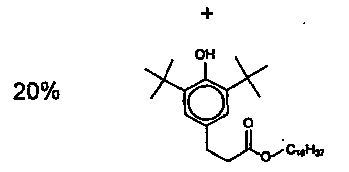 | |
| 12 | 0,5% Ralox LC | | 302 |
| | 0,5% Irganox 1141 | | |

Man erkennt, dass die erfindungsgemäße Zusammensetzung (Nr. 10) überraschenderweise sowohl gegenüber der aus der EP 699 367 A1 bekannten Kombination (Nr. 12) als auch gegenüber Irganox 1141 (Nr. 11) eine bessere antioxidative Wirkung zeigt. Die Kombination weist für Polyamid sogar eine schlechtere antioxidative Wirkung auf, als Irganox 1141. Dies ist besonders überraschend, weil häufig synergistische Effekte bei der Kombination von Stabilisatoren auftreten.

## Patentansprüche

1. Zusammensetzung enthaltend ein Polyamid und 0,01 bis 5 Gew.-% eines Antioxidationsmittel bezogen auf die Gesamtmasse des Polyamids **dadurch gekennzeichnet, dass** ein sterisch gehindertes Phenol der Formel I 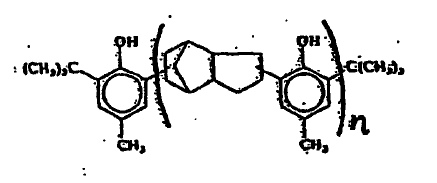 wobei n = 1 - 5 bedeutet, als einziges primäres Antioxidationsmittel verwendet wird.

2. Zusammensetzung gemäß dem Anspruch 1 **dadurch gekennzeichnet, dass** von 0,1 bis 3 Gew.-% Antioxidationsmittel bezogen auf die Gesamtmasse des Polyamids eingesetzt werden.

## Claims

1. Composition comprising a polyamide and from 0.01 to 5 % by weight of an antioxidant based on the total mass of the polyamide
**characterized in that**
a sterically hindered phenol of formula I 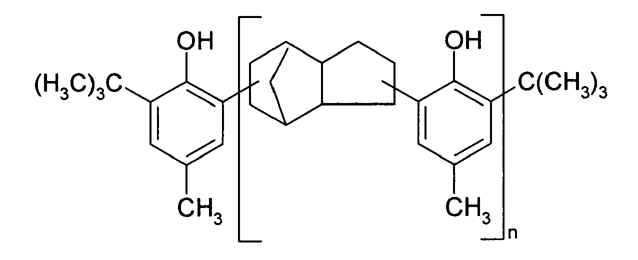 wherein n is from 1 to 5 is used as the sole primary antioxidant.

2. Composition according to claim 1, **characterized in that** from 0.1 to 3 % by weight of antioxidant are used based on the total mass of the polyamide.

## Revendications

1. Composition contenant un polyamide et 0,01 à 5% en poids d'un antioxydant par rapport à la masse totale du polyamide, **caractérisée en ce qu'**on utilise un phénol stériquement encombré de formule I 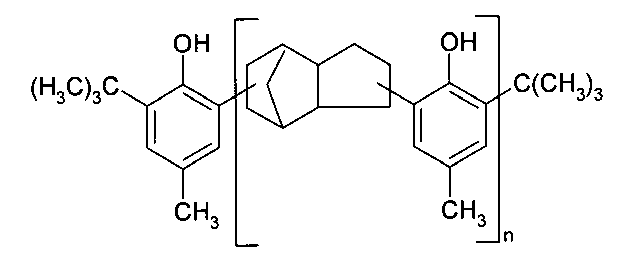 où n = 1 - 5, comme antioxydant primaire unique.

2. Composition selon la revendication 1, **caractérisée en ce qu'**on utilise 0,1 à 3% en poids d'antioxydant par rapport à la masse totale du polyamide.
